# EUROPÄISCHE PATENTSCHRIFT

(11) **EP 3 342 583 B1**
(45) Veröffentlichungstag und Bekanntmachung des Hinweises auf die Patenterteilung: **30.03.2022**
(21) Anmeldenummer: 17210517.3
(22) Anmeldetag: 22.12.2017
(51) Int. Cl.: B29C 35/08, B29C 64/153, B29C 64/165, B29C 64/295, B22F 10/28, B22F 10/362, B22F 12/47, B22F 12/13, B33Y 10/00, B33Y 30/00, B33Y 40/00, B22F 12/67, B22F 10/14

(54) **VERFAHREN UND VORRICHTUNG ZUM GENERATIVEN HERSTELLEN EINES DREIDIMENSIONALEN OBJEKTS**
METHOD AND DEVICE FOR GENERATIVE PRODUCTION OF A THREE-DIMENSIONAL OBJECT
PROCÉDÉ ET DISPOSITIF DE FABRICATION ADDITIVE D'UN OBJET TRIDIMENSIONNEL

(30) Priorität: 29.12.2016 DE 102016226322
(43) Veröffentlichungstag der Anmeldung: 04.07.2018
(73) Patentinhaber: EOS GmbH Electro Optical Systems, 82152 Krailling (DE)
(72) Erfinder: GRÜNBERGER, Stefan, 81739 München (DE); PATERNOSTER, Stefan, 82346 Andechs (DE)
(74) Vertreter: Prüfer & Partner mbB Patentanwälte · Rechtsanwälte

(56) Entgegenhaltungen:
- EP-A1- 3 408 074
- WO-A1-2015/155745
- WO-A1-2016/094827
- DE-A1-102012 212 587
- DE-A1-102014 108 061

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines Aufbaumaterials, vorzugsweise eines Pulvers.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Die zum Zeitpunkt der vorliegenden Anmeldung noch nicht veröffentlichte DE 10 2016 203 556 beschreibt eine Lasersintervorrichtung, bei der pulverförmiges Aufbaumaterial mittels einer über ein Baufeld fahrenden Beschichtungseinheit aufgebracht und mittels einer hinter der Beschichtungseinheit über das Baufeld fahrenden lokalen Strahlungsheizung aufgeheizt wird.

Druckschrift WO 2015/155745 A1 beschreibt ein Verfahren zum Herstellen eines dreidimensionalen Objekts durch schichtweises Aufbringen und selektives Verfestigen eines pulverförmigen Aufbaumaterials. Zum Vorheizen einer aufgebrachten Pulverschicht ist eine Heizvorrichtung, die eine Mehrzahl von Induktionsspulen umfasst, vorgesehen.

Die Druckschrift DE 10 2012 212 587 A1 beschreibt ein additives Herstellungsverfahren, bei dem das Aufbringen einer Schicht eines pulverförmigen Aufbaumaterials mit einer vorbestimmten Höhe unterteilt ist in das Aufbringen zweier Teilschichten, deren Gesamthöhe der vorbestimmten Höhe entspricht, und zwischen dem Schritt des Aufbringens der ersten Pulverteilschicht und dem Schritt des Aufbringens der zweiten Pulverteilschicht die jeweils zuletzt aufgebrachte Pulverschicht beheizt wird. Gemäß einer Ausführungsform sind hierfür zwei Teilschicht-Beschichter vorgesehen und in Fahrtrichtung hinter jedem Teilschicht-Beschichter ist ein Heizelement angeordnet, das mit dem Teilschicht-Beschichter verfahren wird.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektives Verfestigen eines Aufbaumaterials bereitzustellen, bei denen die Qualität des Aufheizens mittels einer hinter einer Beschichtungseinheit ein Baufeld fahrenden Heizeinheit verbessert ist.

Diese Aufgabe wird gelöst durch ein Herstellungsverfahren gemäß Anspruch 1, eine Herstellvorrichtung gemäß Anspruch 9, ein Computerprogramm gemäß Anspruch 13 und eine Steuerungseinrichtung gemäß Anspruch 14. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Das erfindungsgemäße Herstellungsverfahren dient zum generativen Herstellen eines dreidimensionalen Objekts durch schichtweises Aufbringen und selektives Verfestigen eines Aufbaumaterials. Das Verfahren umfasst die Schritte des Aufbringens einer Schicht des Aufbaumaterials auf ein Baufeld mittels eines Beschichters und des selektiven Verfestigens der aufgebrachten Schicht des Aufbaumaterials an Stellen, die einem Querschnitt des herzustellenden Objekts entsprechen, mittels einer Verfestigungsvorrichtung. Die Schritte des Aufbringens und des Verfestigens werden wiederholt, bis das dreidimensionale Objekt fertiggestellt ist. Ein in einer Bewegungsrichtung über das Baufeld bewegtes und von der Verfestigungsvorrichtung verschiedenes Heizelement bringt lokal Wärmeenergie in die neu aufgebrachte Schicht des Aufbaumaterials und/oder in die bereits selektiv verfestigte Schicht des Aufbaumaterials ein. Dabei ist die von dem Heizelement an einer Stelle des Baufelds abgegebene Wärmeenergie abhängig von der Position dieser Stelle auf dem Baufeld einstellbar bzw. wird eingestellt und die Heizleistung des Heizelements wird positionsabhängig variiert. Dadurch kann beispielsweise eine Inhomogenität einer Temperaturverteilung auf dem Baufeld einfach kompensiert werden.

Vorzugsweise ist die Heizleistung des Heizelements abhängig von der Position des Heizelements in der Bewegungsrichtung einstellbar bzw. wird eingestellt. Dadurch kann beispielsweise eine Inhomogenität einer Temperaturverteilung in der Bewegungsrichtung einfach kompensiert werden.

Vorzugsweise hat das Heizelement eine längliche Form, deren Längsrichtung quer, vorzugsweise senkrecht zu seiner Bewegungsrichtung verläuft, und die Heizleistung des Heizelements ist abhängig von der Position in der Längsrichtung des Heizelements einstellbar. Dadurch kann beispielsweise eine Inhomogenität einer Temperaturverteilung senkrecht zu der Bewegungsrichtung einfach kompensiert werden.

Erfindungsgemäß erfolgt die lokale Erwärmung mittels Strahlung. Vorzugsweise erfolgt die lokale Erwärmung zusätzlich mittels Induktion. Dadurch kann beispielsweise auf einfache Weise lokal Wärmeenergie auf das Baufeld aufgebracht werden.

Vorzugsweise wird der Beschichter zum Aufbringen der Schicht des Aufbaumaterials in einer Beschichtungsrichtung über das Baufeld bewegt, und die Bewegung des Heizelements ist mit der Bewegung des Beschichters koordiniert, bevorzugt gekoppelt. Dadurch kann beispielsweise das Beheizen des Baufelds mit der Beschichtung koordiniert werden.

Vorzugsweise ist das Heizelement in der Beschichtungsrichtung hinter dem Beschichter angeordnet. Dadurch kann beispielsweise die neu aufgebrachte Schicht schneller auf eine gewünschte Arbeitstemperatur gebracht werden.

Alternativ oder ergänzend ist das Heizelement in der Beschichtungsrichtung vor dem Beschichter angeordnet. Dadurch kann beispielsweise verhindert werden, dass die Unterlage, auf der die neue Schicht aufgebracht wird, zu sehr abkühlt.

Erfindungsgemäß wird die Verfestigungsvorrichtung zum selektiven Verfestigen der aufgebrachten Schicht in einer Verfestigungsrichtung über das Baufeld bewegt, und die Bewegung des Heizelements ist mit der Bewegung der Verfestigungsvorrichtung koordiniert, bevorzugt gekoppelt. Dadurch kann beispielsweise das Beheizen des Baufelds mit der Verfestigung koordiniert werden.

Vorzugsweise wird der Beschichter zum Aufbringen der Schicht des Aufbaumaterials in einer Beschichtungsrichtung über das Baufeld bewegt, wird die Verfestigungsvorrichtung zum selektiven Verfestigen der aufgebrachten Schicht in der Beschichtungsrichtung über das Baufeld bewegt und wird das Heizelement zwischen dem Beschichter und der Verfestigungsvorrichtung in der Beschichtungsrichtung über das Baufeld bewegt. Dadurch kann beispielsweise das Aufbaumaterial nach seinem Aufbringen und vor seiner Verfestigung vorgeheizt werden.

Das erfindungsgemäße Computerprogramm ist in eine programmierbare Steuereinheit ladbar und enthält Programmcodemittel, um alle Schritte eines erfindungsgemäßen Verfahrens auszuführen, wenn das Computerprogramm auf der Steuereinheit ausgeführt wird. Dadurch kann beispielsweise eine Inhomogenität einer Temperaturverteilung auf dem Baufeld einfach kompensiert werden.

Die erfindungsgemäße Steuerungseinrichtung dient zum Steuern einer Herstellvorrichtung zum generativen Herstellen eines dreidimensionalen Objekts durch schichtweises Aufbringen und selektives Verfestigen eines Aufbaumaterials, einen Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen enthält. Die Steuerungseinrichtung ist dazu ausgebildet, die Herstellvorrichtung so zu steuern, dass sie ein erfindungsgemäßes Verfahren durchführt. Dadurch kann beispielsweise eine Inhomogenität einer Temperaturverteilung auf dem Baufeld einfach kompensiert werden.

Die erfindungsgemäße Herstellvorrichtung dient zum generativen Herstellen eines dreidimensionalen Objekts durch schichtweises Aufbringen und selektives Verfestigen eines Aufbaumaterials. Sie enthält einen Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen. Sie ist ausgebildet und/oder gesteuert, die Schritte des Aufbringens und des selektiven Verfestigens zu wiederholen, bis das Objekt fertiggestellt ist. Die Herstellvorrichtung enthält ferner ein in einer Bewegungsrichtung über das Baufeld bewegbares und von der Verfestigungsvorrichtung verschiedenes Heizelement, das in der Lage ist, lokal Wärmeenergie in die neu aufgebrachte Schicht des Aufbaumaterials und/oder in die bereits selektiv verfestigte Schicht des Aufbaumaterials einzubringen, wobei die Verfestigungsvorrichtung zum selektiven Verfestigen der aufgebrachten Schicht in einer Verfestigungsrichtung über das Baufeld bewegbar ist, und wobei die Bewegung des Heizelements mit der Bewegung der Verfestigungsvorrichtung koordiniert, bevorzugt gekoppelt, ist Die Herstellvorrichtung ist ferner gesteuert, die Wärmeenergie so einzubringen, dass die von dem Heizelement an einer Stelle des Baufelds abgegebene Wärmeenergie abhängig von der Position dieser Stelle auf dem Baufeld ist und die Heizleistung positionsabhängig variiert wird und wobei das Heizelement eine Strahlungsheizung enthält Dadurch kann beispielsweise eine Inhomogenität einer Temperaturverteilung auf dem Baufeld einfach kompensiert werden.

Vorzugsweise hat das Heizelement eine längliche Form und enthält in seiner Längsrichtung eine Mehrzahl einzeln ansteuerbarer Teilelemente. Dadurch kann beispielsweise die Heizleistung in der Längsrichtung des Heizelements variiert werden. Vorzugsweise enthält das Heizelement und/oder eines oder mehrere seiner Teilelemente die Strahlungsheizung und eine Induktionsspule und/oder eine Heizspule Dadurch kann beispielsweise ein lokales Heizelement einfach verwirklicht werden.

Vorzugsweise enthält die Strahlungsheizung eine Lampe, eine oder mehrere Leuchtdioden und/oder einen oder mehrere Laser, wobei der oder die Laser vorzugsweise als VCSEL oder VECSEL gebildet ist oder sind. Dadurch kann beispielsweise eine Strahlungsheizung einfach verwirklicht werden, insbesondere eine in der Längsrichtung des Heizelements aus einer Mehrzahl einzeln ansteuerbarer Teilelemente gebildete Strahlungsheizung.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß der vorliegenden Erfindung.
- Fig. 2a: bis d sind schematische Seitenansichten von Beispielen der Anordnung eines in der Vorrichtung aus Fig. 1 enthaltenen Heizelements.
- Fig. 3a: bis e sind schematische Seitenansichten, die die Ansteuerung des in der Vorrichtung aus Fig. 1 enthaltenen Heizelements beim Verfahren über ein Baufeld zeigen.
- Fig. 4: ist eine schematische Ansicht eines im Rahmen der Erfindung verwendbaren in einzelne Heizsegmente unterteilten Heizelements von unten.
- Fig. 5a: bis e sind schematische Seitenansichten, die die Ansteuerung des in Fig. 4 gezeigten Heizelements beim Verfahren über das Baufeld im Rahmen der Durchführung eines Ausführungsbeispiels des erfindungsgemäßen Verfahrens zeigen.

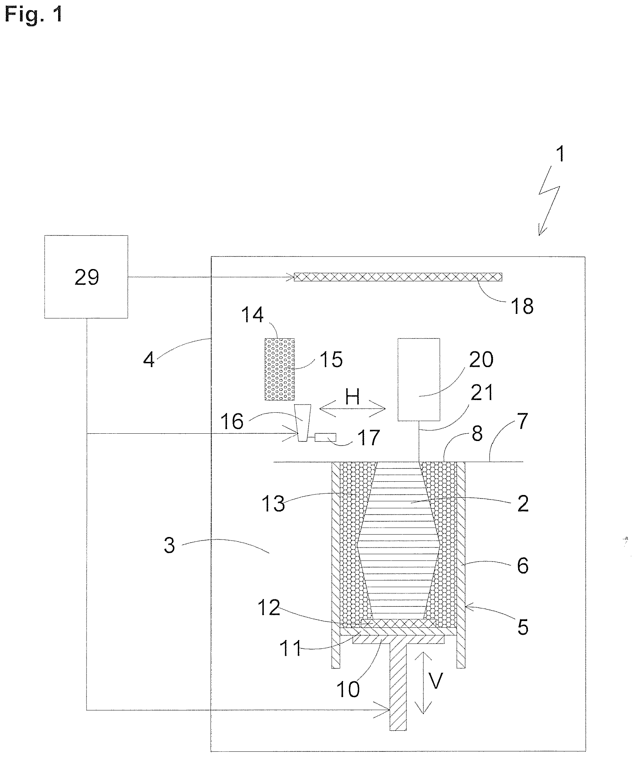

Im Folgenden wird mit Bezug auf Fig. 1 ein Ausführungsbeispiel einer Vorrichtung 1 gemäß der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich. An dem Beschichter ist ein lokales Heizelement 17 angebracht zum Heizen der durch den Beschichter 16 aufgebrachten Schicht. Das lokale Heizelement 17 kann als Strahlungsheizung gebildet sein, beispielsweise als Infrarotstrahler.

Optional ist in der Prozesskammer 3 eine globale Strahlungsheizung 18 angeordnet, die zum Beheizen des aufgebrachten Aufbaumaterials 15 dient. Als globale Strahlungsheizung 18 kann beispielsweise ein Infrarotstrahler vorgesehen sein.

Die Lasersintervorrichtung 1 enthält ferner einen ebenfalls in einer horizontalen Richtung H bewegbaren Belichter 20, der eine Laserstrahlung 21 erzeugt, die auf die Arbeitsebene 7 fokussiert wird. Der Belichter 20 ist vorzugsweise als Zeilenbelichter ausgebildet, der in der Lage ist, eine sich quer zu seiner Bewegungsrichtung erstreckende Linie zu belichten, die sich über den gesamten zu belichtenden Bereich erstreckt.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit 29 geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Das pulverförmige Aufbaumaterial 15 wird mittels des lokalen Heizelements 17 auf eine Arbeitstemperatur vorgeheizt. Optional wird das pulverförmige Aufbaumaterial 15 zusätzlich mittels der globalen Strahlungsheizung 18 beheizt.

Anschließend verfährt der Belichter 20 über die aufgebrachte und vorgeheizte Pulverschicht und verfestigt das pulverförmige Aufbaumaterial 13 an den Stellen, die dem Querschnitt des herzustellenden Objekts 2 entsprechen, indem er selektiv diese Stellen mit der Laserstrahlung 21 belichtet. Dabei werden die Pulverkörner an diesen Stellen durch die durch die Strahlung eingebrachte Energie teilweise oder vollständig aufgeschmolzen, so dass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

Das lokale Heizelement 17 hat eine längliche Form, deren Längsachse sich quer, vorzugsweise senkrecht zu der Bewegungsrichtung des Beschichters 16 erstreckt. Die Länge des lokalen Heizelement 17 entspricht der Abmessung des Baufelds 8 quer zu der Bewegungsrichtung des Beschichters 16. Somit kann das Heizelement bei seiner Bewegung über das Baufeld 8 Wärmeenergie lokal an jeder Stelle des Baufelds einbringen.

Dabei kann das lokale Heizelement in einer Bewegungsrichtung des Beschichters 16 hinter dem Beschichter 16 angeordnet sein, um die neu aufgebrachte Schicht zu heizen und sie so beispielsweise schneller auf eine gewünschte Arbeitstemperatur zu bringen. Alternativ dazu kann das lokale Heizelement 17 auch in der Bewegungsrichtung vor dem Beschichter 16 angeordnet sein und die Unterlage beheizen, auf der die neue Schicht aufgebracht wird, wodurch diese beispielsweise durch das Aufbringen der neuen Pulverschicht weniger abgekühlt wird. Auch eine Kombination beider Anordnungen ist möglich, um beide Effekte zu erzielen. Wenn der Beschichter 16 für eine Beschichtung in zwei entgegengesetzten Richtungen ausgebildet ist, ist vorzugsweise beidseitig ein Heizelement 17 angeordnet. Dabei wird je nach Bewegungsrichtung des Beschichters 16 wahlweise das vorlaufende Heizelement 17, das nachlaufende Heizelement 17 oder beide angesteuert.

Alternativ kann das das Heizelement ein- oder beidseitig an dem Belichter angebracht sein, oder es kann getrennt von beiden über das Baufeld verfahrbar sein. Dabei kann die Bewegung des Heizelements mit der Bewegung des Beschichters koordiniert, bevorzugt gekoppelt, sein. Erfindungsgemäß wird die Bewegung des Heizelements mit der Bewegung des Beschichters koordiniert, bevorzugt gekoppelt, sein. Das Heizelement kann vor dem Beschichter und/oder zwischen Beschichter und Belichter und/oder hinter dem Belichter über das Baufeld verfahren werden.

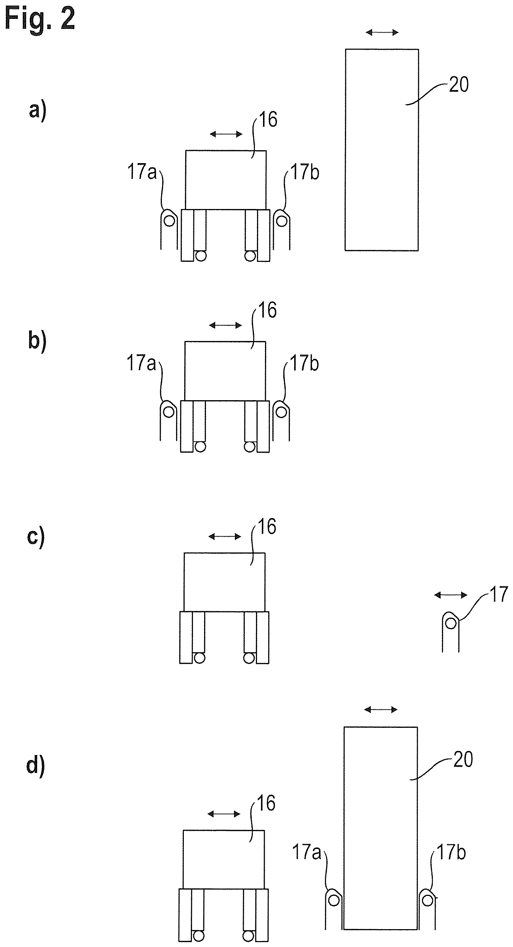

Fig. 2 zeigt nicht einschränkende Beispiele für die Anordnung des Heizelements an dem Beschichter (Fig. 2a, und 2b), an dem Belichter (Fig. 2d) und getrennt von beiden (Fig. 2c).

Gemäß der vorliegenden Erfindung wird das lokale Heizelement 17 bei seinem Verfahren über das Baufeld dabei so angesteuert, dass die von ihm an einer Stelle des Baufelds 8 abgegebene Wärmeenergie abhängig von der Position dieser Stelle auf dem Baufeld ist. Es wird also nicht an allen Stellen eine konstante Heizleistung abgegeben, sondern sie wird positionsabhängig variiert. Das kann auf unterschiedliche Weisen verwirklicht werden.

In einer ersten Variante kann bei einer Bewegung des Heizelements 17 in der Bewegungsrichtung des Beschichters 16 der Verlauf der Heizleistung über der Zeit verändert werden. Daraus ergibt sich, dass das Heizelement 17 an verschiedenen Positionen des Baufelds, die in der Bewegungsrichtung des Beschichters 16 voneinander beabstandet sind, verschiedene Mengen von Wärmeenergie einbringen kann.

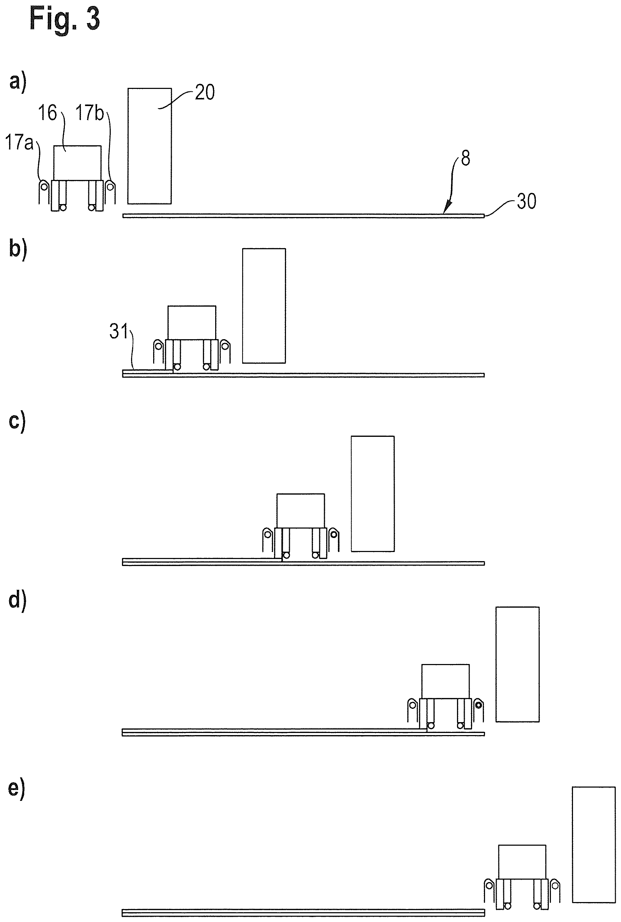

Fig. 3 veranschaulicht diese Vorgehensweise anhand einer Anordnung gemäß Fig. 3. Der Beschichter 16 verfährt über das Baufeld 8 und bringt dabei auf der Oberfläche eines aus den bisher aufgebrachten Pulverschichten gebildeten Pulverbett 30 eine neue Pulverschicht 31 auf. Dabei wird von den zwei beidseitig des Beschichters 16 angebrachten Heizelementen das in der Bewegungsrichtung vorne liegende Heizelement 17b so angesteuert, dass seine Heizleistung, symbolisiert durch die Strichstärke des Kreisumfangs, von Schritt a bis Schritt d zunimmt und danach in Schritt e wieder abfällt.

In einer zweiten Variante kann das Heizelement aber auch so angesteuert werden, dass es nicht über seine gesamte Länge hinweg dieselbe Leistung abgibt, sondern dass der Verlauf der Heizleistung über die Länge des Heizelements hinweg verändert wird. Das kann beispielsweise dadurch verwirklicht werden, dass das Heizelement in seiner Längsrichtung eine Mehrzahl einzeln ansteuerbarer Teilelemente enthält. Daraus ergibt sich, dass das Heizelement 17 an verschiedenen Positionen des Baufelds, die in einer zu der Bewegungsrichtung des Beschichters 16 senkrechten Richtung voneinander beabstandet sind, verschiedene Mengen von Wärmeenergie einbringen kann.

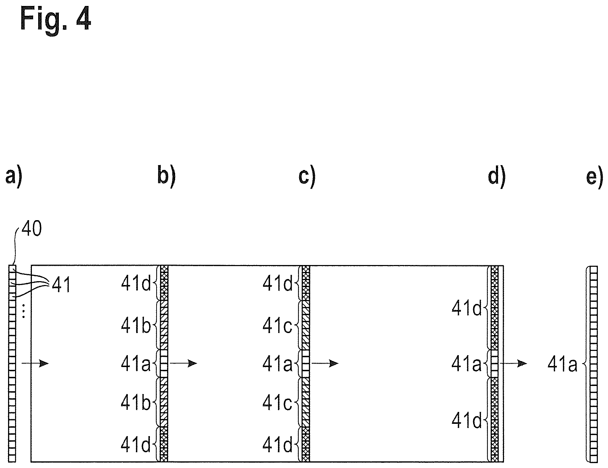

Fig. 4a zeigt so ein segmentiertes Heizelement 40, das in einzeln ansteuerbare Heizsegmente 41 unterteilt ist. Fig. 4b bis 4e zeigen unterschiedliche Ansteuerungen der einzelnen Heizsegmente. Mit 41a bis 41d sind darin Heizelemente bezeichnet, die mit jeweils gleicher aber im Vergleich zu anderen Heizelementen unterschiedlicher Heizleistung angesteuert werden. Heizelemente 41a haben dabei die geringste Heizleistung, Heizelemente 14d die höchste. Somit kann man entlang der Längsrichtung des segmentierten Heizelements 40 unterschiedliche Heizleistungsprofile verwirklichen.

Beide Varianten (wie anhand von Fig. 3 und 4 beschrieben) können auch miteinander kombiniert werden, so dass die Heizleistung für jede Position auf dem zweidimensionalen Baufeld separat eingestellt werden kann.

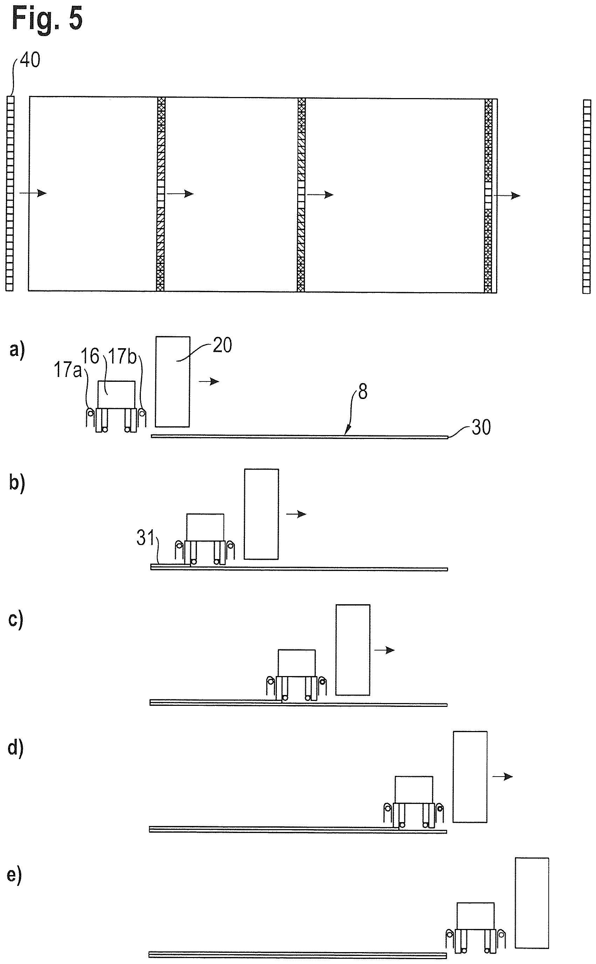

Fig. 5 veranschaulicht diese Vorgehensweise. Oben ist noch einmal eine Fig. 4 entsprechende Darstellung des segmentierten Heizelements 40 von unten gezeigt. Der Beschichter 16 verfährt über das Baufeld 8 und bringt dabei auf der Oberfläche eines aus den bisher aufgebrachten Pulverschichten gebildeten Pulverbett 30 eine neue Pulverschicht 31 auf. Dabei wird von den zwei beidseitig des Beschichters 16 angebrachten Heizelementen das in der Bewegungsrichtung vorne liegende Heizelement 17b so angesteuert, dass seine Heizleistung von Schritt a bis Schritt e die jeweils in Fig. 4a bis 4e gezeigte Leistungsverteilung annimmt. Daraus ergibt sich, dass die Heizleistung der beidseitig der mit niedriger Leistung angesteuerten mittleren Heizsegmente liegenden Heizsegmente von Schritt a bis Schritt d zunimmt und danach in Schritt e wieder abfällt.

Durch das Einstellen der Heizleistung des Heizelements 17 abhängig von der Position im Baufeld 8 ist es möglich, bei dem Heizen durch das Heizelement 17 gezielt eine Inhomogenität der Temperaturverteilung auf dem Baufeld 8 auf einfache Weise auszugleichen. Eine solche Inhomogenität entsteht beispielsweise durch die allgemeine Maschinenkonstruktion, die Art der Prozessführung, eine Inhomogenität der Strahlungsverteilung der globalen Strahlungsheizung 18 und ihre unterschiedliche Einwirkungsdauer auf die neu aufgebrachte Schicht abhängig von einer Position in der Bewegungsrichtung des Beschichters 16 usw. Ferner hängt die lokale Temperatur an einer Position des Baufelds auch davon ab, ob dort in der vorausgegangenen Schicht eine Verfestigung durch den Laser stattgefunden hat oder nicht.

Diese Inhomogenität der Temperaturverteilung kann beispielsweise mittels einer ortsauflösenden Temperaturmessung direkt während des Herstellungsprozesses festgestellt und das Heizelement entsprechend gesteuert werden. Die Steuerung des Heizelements kann aber auch ohne permanente Temperaturmessung erfolgen, wobei die an jeder Position erforderliche Heizleistung jeweils aus Erfahrungsdaten, den Belichtungsdaten (z.B. Position, Fokusdurchmesser, Laserleistung u.ä.) und dem Prozessablauf (z.B. Lage der Stelle in der Bewegungsrichtung des Beschichters) berechnet werden.

Durch die Verbesserung der Homogenität der Temperaturverteilung über das Baufeld kann beispielsweise der Herstellvorgang reproduzierbarer durchgeführt und damit die Qualität des hergestellten Objekts verbessert werden.

Die lokale Erwärmung durch das Heizelement erfolgt mittels Strahlung und optional zusätzlich mittels Induktion. So kann das Heizelement beispielsweise zusätzlich zu der oben beschriebenen Strahlungsheizung eine Induktionsspule und/oder eine Heizspule enthalten. Die Strahlungsheizung kann eine Lampe, eine oder mehrere Leuchtdioden und/oder einen oder mehrere Laser enthalten, wobei der oder die Laser vorzugsweise als VCSEL oder VECSEL gebildet sein können.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Als Laser kann beispielsweise ein oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser verwendet werden. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw.

Strahlenquelle verwendet werden, die geeignet ist, das Aufbaumaterial zu verfestigen. Das Belichten kann auch mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann mit einem verfahrbaren Zeilenbelichter belichtet wird, kann die Erfindung angewendet werden. Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver.

## Patentansprüche

1. Herstellungsverfahren zum generativen Herstellen eines dreidimensionalen Objekts (2) durch schichtweises Aufbringen und selektives Verfestigen eines Aufbaumaterials (15), vorzugsweise eines Pulvers, mit den Schritten:
Aufbringen einer Schicht des Aufbaumaterials (15) auf ein Baufeld (8) mittels eines Beschichters (16),
selektives Verfestigen der aufgebrachten Schicht des Aufbaumaterials (15) an Stellen, die einem Querschnitt des herzustellenden Objekts (2) entsprechen, mittels einer Verfestigungsvorrichtung (20), die zum selektiven Verfestigen der aufgebrachten Schicht in einer Verfestigungsrichtung über das Baufeld (8) bewegt wird, und
Wiederholen der Schritte des Aufbringens und des Verfestigens, bis das dreidimensionale Objekt (2) fertiggestellt ist,
wobei ein in einer Bewegungsrichtung über das Baufeld (8) bewegtes und von der Verfestigungsvorrichtung (20) verschiedenes Heizelement (17) lokal Wärmeenergie in die neu aufgebrachte Schicht des Aufbaumaterials (15) und/oder in die bereits selektiv verfestigte Schicht des Aufbaumaterials (15) einbringt,
wobei die Bewegung des Heizelements (17) mit der Bewegung der Verfestigungsvorrichtung (20) koordiniert, bevorzugt gekoppelt, ist,
die von dem Heizelement (17) an einer Stelle des Baufelds (8) abgegebene Wärmeenergie abhängig von der Position dieser Stelle auf dem Baufeld (8) einstellbar ist und die Heizleistung positionsabhängig variiert wird, und
wobei die lokale Erwärmung mittels Strahlung erfolgt.

2. Herstellungsverfahren gemäß Anspruch 1, bei dem
die Heizleistung des Heizelements (17) abhängig von der Position des Heizelements (17) in der Bewegungsrichtung einstellbar ist.

3. Herstellungsverfahren gemäß Anspruch 1 oder 2, bei dem
das Heizelement (17) eine längliche Form hat, deren Längsrichtung quer, vorzugsweise senkrecht zu seiner Bewegungsrichtung verläuft, und
die Heizleistung des Heizelements (17) abhängig von der Position in der Längsrichtung des Heizelements (17) einstellbar ist.

4. Herstellungsverfahren gemäß einem der Ansprüche 1 bis 3, und bei dem
die lokale Erwärmung mittels Induktion erfolgt.

5. Herstellungsverfahren gemäß einem der Ansprüche 1 bis 4, bei dem
der Beschichter (16) zum Aufbringen der Schicht des Aufbaumaterials (15) in einer Beschichtungsrichtung über das Baufeld (8) bewegt wird und
die Bewegung des Heizelements (17) mit der Bewegung des Beschichters (16) koordiniert, bevorzugt gekoppelt, ist.

6. Herstellungsverfahren gemäß einem der Ansprüche 1 bis 5, bei dem
das Heizelement (17) in der Beschichtungsrichtung hinter dem Beschichter (16) angeordnet ist.

7. Herstellungsverfahren gemäß einem der Ansprüche 1 bis 6, bei dem
das Heizelement (17) in der Beschichtungsrichtung vor dem Beschichter (16) angeordnet ist.

8. Herstellungsverfahren gemäß einem der Ansprüche 1 bis 7 bei dem
der Beschichter (16) zum Aufbringen der Schicht des Aufbaumaterials (15) in einer Beschichtungsrichtung über das Baufeld (8) bewegt wird,
die Verfestigungsvorrichtung (20) zum selektiven Verfestigen der aufgebrachten Schicht in der Beschichtungsrichtung über das Baufeld (8) bewegt wird und
das Heizelement (17) zwischen dem Beschichter (16) und der Verfestigungsvorrichtung (18) in der Beschichtungsrichtung über das Baufeld (8) bewegt wird.

9. Herstellvorrichtung (1) zum generativen Herstellen eines dreidimensionalen Objekts durch schichtweises Aufbringen und selektives Verfestigen eines Aufbaumaterials (15), enthaltend:
einen Beschichter (16) zum Aufbringen einer Schicht des Aufbaumaterials (15) auf das Baufeld und
eine Verfestigungsvorrichtung (20) zum selektiven Verfestigen der aufgebrachten Schicht an Stellen, die einem Querschnitt des herzustellenden Objekts (2) entsprechen, wobei die Verfestigungsvorrichtung (20) zum selektiven Verfestigen der aufgebrachten Schicht in einer Verfestigungsrichtung über das Baufeld (8) bewegbar ist,
wobei die Herstellvorrichtung (1) ausgebildet und/oder gesteuert ist, die Schritte des Aufbringens und des selektiven Verfestigens zu wiederholen, bis das Objekt (2) fertiggestellt ist,
wobei die Herstellvorrichtung (1) ferner ein in einer Bewegungsrichtung über das Baufeld (8) bewegbares und von der Verfestigungsvorrichtung (20) verschiedenes Heizelement (17) enthält, das in der Lage ist, lokal Wärmeenergie in die neu aufgebrachte Schicht des Aufbaumaterials (15) und/oder in die bereits selektiv verfestigte Schicht des Aufbaumaterials (15) einzubringen, wobei die Bewegung des Heizelements (17) mit der Bewegung der Verfestigungsvorrichtung (20) koordiniert, bevorzugt gekoppelt, ist und
die Herstellvorrichtung (1) ferner gesteuert ist, die Wärmeenergie so einzubringen, dass die von dem Heizelement (17) an einer Stelle des Baufelds (8) abgegebene Wärmeenergie abhängig von der Position dieser Stelle auf dem Baufeld (8) ist und die Heizleistung positionsabhängig variiert wird, und
wobei das Heizelement eine Strahlungsheizung enthält.

10. Herstellvorrichtung gemäß Anspruch 9, bei der
das Heizelement (17) eine längliche Form hat und in seiner Längsrichtung eine Mehrzahl einzeln ansteuerbarer Teilelemente enthält.

11. Herstellvorrichtung gemäß Anspruch 9 oder 10, bei der
das Heizelement (17) und/oder eines oder mehrere seiner Teilelemente die Strahlungsheizung und eine Induktionsspule und/oder eine Heizspule enthält.

12. Herstellvorrichtung gemäß einem der Ansprüche 9 bis 11, bei der
die Strahlungsheizung eine Lampe, eine oder mehrere Leuchtdioden und/oder einen oder mehrere Laser enthält, wobei der oder die Laser vorzugsweise als VCSEL oder VECSEL gebildet ist oder sind.

13. Computerprogramm, das in eine programmierbare Steuereinheit (29) einer Herstellvorrichtung gemäß einem der Ansprüche 9 bis 12 ladbar ist, mit Programmcodemitteln, um alle Schritte eines Verfahrens gemäß einem der Ansprüche 1 bis 8 auszuführen, wenn das Computerprogramm auf der Steuereinheit ausgeführt wird.

14. Steuerungseinrichtung (29) für eine Herstellvorrichtung gemäß einem der Ansprüche 9 bis 12,
wobei die Steuerungseinrichtung (29) ausgebildet ist, die Herstellvorrichtung (1) so zu steuern, dass sie ein Verfahren gemäß einem der Ansprüche 1 bis 8 durchführt.

## Claims

1. A manufacturing method for generatively manufacturing a three-dimensional object (2) by layer-by-layer application and selective solidification of a building material (15), preferably a powder, comprising the steps of:
applying a layer of the building material (15) to a build area (8) by means of a recoater (16),
selectively solidifying the applied layer of the building material (15) at points that correspond to a cross-section of the object (2) to be manufactured by means of a solidification device (20) that is moved in a solidification direction across the build area (8) in order to selectively solidify the applied layer, and
repeating the steps of applying and solidifying until the three-dimensional object (2) is completed,
wherein a heating element (17) that is moved in a movement direction across the build area (8) and that is different from the solidification device (20) locally introduces thermal energy into the newly applied layer of the building material (15) and/or into the layer of the building material (15) which has been already selectively solidified,
wherein the movement of the heating element (17) is coordinated, preferably coupled, with the movement of the solidification device (20),
wherein the thermal energy released by the heating element (17) at a point of the build area (8) is adjustable depending on the position of this point in the build area (8) and the heating power is varied depending on the position, and
wherein the local heating is performed by means of radiation.

2. The manufacturing method according to claim 1, wherein
the heating power of the heating element (17) is adjustable depending on the position of the heating element (17) in the movement direction.

3. The manufacturing method according to claim 1 or 2, wherein
the heating element (17) has an elongate shape whose longitudinal direction is oriented transversely, preferably perpendicularly, to its movement direction and
the heating power of the heating element (17) is adjustable depending on the position in the longitudinal direction of the heating element (17).

4. The manufacturing method according to one of claims 1 to 3, and wherein
the local heating is performed by means of induction.

5. The manufacturing method according to one of claims 1 to 4, wherein
the recoater (16) is moved in a recoating direction across the build area (8) in order to apply the layer of the building material (15) and
the movement of the heating element (17) is coordinated, preferably coupled, with the movement of the recoater (16).

6. The manufacturing method according to one of claims 1 to 5, wherein
the heating element (17) is arranged behind the recoater (16) in the recoating direction.

7. The manufacturing method according to one of claims 1 to 6, wherein
the heating element (17) is arranged in front of the recoater (16) in the recoating direction.

8. The manufacturing method according to one of claims 1 to 7, wherein
the recoater (16) is moved in a recoating direction across the build area (8) in order to apply the layer of the building material (15),
the solidification device (20) is moved in the recoating direction across the build area (8) in order to selectively solidify the applied layer, and
the heating element (17) is moved between the recoater (16) and the solidification device (18) in the recoating direction across the build area (8).

9. A manufacturing device (1) for generatively manufacturing a three-dimensional object by layer-by-layer application and selective solidification of a building material (15), comprising:
a recoater (16) for applying a layer of the building material (15) to the build area and
a solidification device (20) for selectively solidifying the applied layer at points that correspond to a cross-section of the object (2) to be manufactured, wherein the solidification device (20) can be moved in a solidification direction across the build area (8) in order to selectively solidify the applied layer,
wherein the manufacturing device (1) is configured and/or controlled to repeat the steps of applying and selectively solidifying until the object (2) is completed,
wherein the manufacturing device (1) further comprises a heating element (17) which is movable across the build area (8) in a movement direction and is different from the solidification device (20) and which is capable of locally introducing thermal energy into the newly applied layer of the building material (15) and/or into the layer of the building material (15) which is already selectively solidified, wherein the movement of the heating element (17) is coordinated, preferably coupled, with the movement of the solidification device (20), and
the manufacturing device (1) is further controlled to introduce the thermal energy such that the thermal energy released by the heating element (17) at a point of the build area (8) depends on the position of this point in the build area (8) and the heating power is varied depending on the position, and
wherein the heating element comprises a radiation heater.

10. The manufacturing device according to claim 9, in which
the heating element (17) has an elongate shape and comprises several individually controllable partial elements in its longitudinal direction.

11. The manufacturing device according to claim 9 or 10, in which
the heating element (17) and/or one or more of its partial elements comprises the radiation heater and an induction coil and/or a heating coil.

12. The manufacturing device according to one of claims 9 to 11, in which
the radiation heater comprises a lamp, one or more light-emitting diodes, and/or one or more lasers, wherein the laser or the lasers is/are preferably formed as VCSEL or VECSEL.

13. A computer program loadable into a programmable control unit (29) of a manufacturing device according to one of claims 9 to 12 and having program code means in order to perform all steps of a method according to one of claims 1 to 8 when the computer program is executed in the control unit.

14. A control device (29) for a manufacturing device according to one of claims 9 to 12,
wherein the control device (29) is configured to control the manufacturing device (1) such as to perform a method according to one of claims 1 to 8.

## Revendications

1. Procédé de fabrication pour fabriquer de manière générative un objet tridimensionnel (2) par application couche par couche et solidification sélective d'un matériau de construction (15), de préférence une poudre, comprenant les étapes :
appliquer une couche du matériau de construction (15) sur une région de construction (8) au moyen d'un enducteur (16),
solidifier sélectivement la couche appliquée du matériau de construction (15) à des points qui correspondent à une section transversale de l'objet (2) à fabriquer au moyen d'un dispositif de solidification (20) qui est déplacé dans une direction de solidification à travers la région de construction (8) afin de solidifier sélectivement la couche appliquée, et
répéter les étapes d'application et de solidification jusqu'à ce que l'objet tridimensionnel (2) soit complété,
dans lequel un élément de chauffage (17) qui est déplacé dans une direction de mouvement à travers la région de construction (8) et qui est différent du dispositif de solidification (20) introduit localement de l'énergie thermique dans la couche nouvellement appliquée du matériau de construction (15) et/ou dans la couche du matériau de construction (15) qui a déjà été solidifiée sélectivement,
dans lequel le mouvement de l'élément de chauffage (17) est coordonné, de préférence couplé, au mouvement du dispositif de solidification (20),
l'énergie thermique libérée par l'élément de chauffage (17) à un point de la région de construction (8) est réglable en fonction de la position de ce point dans la région de construction (8) et la puissance de chauffage est variée en fonction de la position, et
dans lequel le chauffage local est effectué par rayonnement.

2. Procédé de fabrication selon la revendication 1, dans lequel
la puissance de chauffage de l'élément de chauffage (17) est réglable en fonction de la position de l'élément de chauffage (17) dans la direction de déplacement.

3. Procédé de fabrication selon la revendication 1 ou 2, dans lequel
l'élément chauffant (17) a une forme allongée dont la direction longitudinale est orientée transversalement, de préférence perpendiculairement, à sa direction de déplacement et
la puissance de chauffage de l'élément de chauffage (17) est réglable en fonction de la position dans la direction longitudinale de l'élément de chauffage (17).

4. Procédé de fabrication selon l'une des revendications 1 à 3, dans lequel le chauffage local est effectué par induction.

5. Procédé de fabrication selon l'une des revendications 1 à 4, dans lequel
l'enducteur (16) est déplacé dans une direction d'enduction à travers la région de construction (8) afin d'appliquer la couche de matériau de construction (15) et
le mouvement de l'élément de chauffage (17) est coordonné, de préférence couplé, avec le mouvement de l'enducteur (16).

6. Procédé de fabrication selon l'une des revendications 1 à 5, dans lequel
l'élément de chauffage (17) est disposé derrière l'enducteur (16) dans la direction d'enduction.

7. Procédé de fabrication selon l'une des revendications 1 à 6, dans lequel
l'élément de chauffage (17) est disposé devant l'enducteur (16) dans la direction d'enduction.

8. Procédé de fabrication selon l'une des revendications 1 à 7, dans lequel.
l'enducteur (16) est déplacé dans une direction d'enduction à travers la région de construction (8) afin d'appliquer la couche du matériau de construction (15),
le dispositif de solidification (20) est déplacé dans la direction d'enduction à travers la région de construction (8) afin de solidifier sélectivement la couche appliquée, et
l'élément de chauffage (17) est déplacé entre l'enducteur (16) et le dispositif de solidification (18) dans la direction d'enduction à travers la région de construction (8).

9. Dispositif de fabrication (1) pour fabriquer de manière générative un objet tridimensionnel par application couche par couche et solidification sélective d'un matériau de construction (15), comprenant :
un enducteur (16) pour appliquer une couche du matériau de construction (15) sur la région de construction et
un dispositif de solidification (20) pour solidifier sélectivement la couche appliquée à des points qui correspondent à une section transversale de l'objet (2) à fabriquer, dans lequel le dispositif de solidification (20) est déplaçable dans une direction de solidification à travers la région de construction (8) afin de solidifier sélectivement la couche appliquée,
dans lequel le dispositif de fabrication (1) est configuré et/ou commandé pour répéter les étapes d'application et de solidification sélective jusqu'à ce que l'objet (2) soit complété,
dans lequel le dispositif de fabrication (1) comprend en outre un élément de chauffage (17) qui est déplaçable à travers la région de construction (8) dans une direction de déplacement et qui est différent du dispositif de solidification (20) et qui est capable d'introduire localement de l'énergie thermique dans la couche nouvellement appliquée du matériau de construction (15) et/ou dans la couche du matériau de construction (15) qui est déjà sélectivement solidifiée, dans lequel le déplacement de l'élément de chauffage (17) est coordonné, de préférence couplé, au déplacement du dispositif de solidification (20), et
le dispositif de fabrication (1) est en outre commandé pour introduire l'énergie thermique de telle sorte que l'énergie thermique libérée par l'élément de chauffage (17) à un point de la région de construction (8) dépend de la position de ce point dans la région de construction (8) et que la puissance de chauffage est variée en fonction de la position, et
dans lequel l'élément de chauffage comprend un dispositif de chauffage par rayonnement.

10. Dispositif de fabrication selon la revendication 9, dans lequel
l'élément de chauffage (17) a une forme allongée et comprend plusieurs éléments partiels commandables individuellement dans sa direction longitudinale.

11. Dispositif de fabrication selon la revendication 9 ou 10, dans lequel
l'élément de chauffage (17) et/ou un ou plusieurs de ses éléments partiels comprend le dispositif de chauffage par rayonnement et une bobine d'induction et/ou une bobine de chauffage.

12. Dispositif de fabrication selon l'une des revendications 9 à 11, dans lequel
le dispositif de chauffage par rayonnement comprend une lampe, une ou plusieurs diodes électroluminescentes et/ou un ou plusieurs lasers, le ou les lasers étant de préférence réalisés sous forme de VCSEL ou VECSEL.

13. Programme informatique susceptible d'être chargé dans une unité de commande programmable (29) d'un dispositif de fabrication selon l'une des revendications 9 à 12 et ayant des moyens de code de programme afin d'effectuer toutes les étapes d'un procédé selon l'une des revendications 1 à 8 lorsque le programme informatique est exécuté dans l'unité de commande.

14. Dispositif de commande (29) pour un dispositif de fabrication selon l'une des revendications 9 à 12,
dans lequel le dispositif de commande (29) est configuré pour commander le dispositif de fabrication (1) de manière à effectuer un procédé selon l'une des revendications 1 à 8.
